# EUROPEAN PATENT APPLICATION

(11) **EP 1 462 000 A1**
(43) Date of publication of application: **29.09.2004**
(21) Application number: 03425493.8
(22) Date of filing: 22.07.2003
(51) Int. Cl.: A01K 97/02

(54) **Depth chumming device for sports fisching**

(30) Priority: 28.03.2003 IT MC20030034
(71) Applicant: Samplast di Ortolani Giancarlo E.C. S.N.C., 06038 Spello (PG) (IT)
(72) Inventor: Ortolani, Giangarlo, 06034 Foligno (PG) (IT)
(74) Representative: Baldi, Claudio

(57) **Abstract**

The present invention refers to a depth chumming device for sports fishing to be used on board, consisting in a small box filled with chum and lowered in the water suspended to a cable. Once the box has reached the desired depth, the user can energetically and instantaneously pull the box up with the cable to actuate a mechanism that opens the collapsible bottom wall of the box to spread chum in the water.

## Description

The present patent application refers to a depth chumming device for sports fishing to be used on board.

The device of the invention has been devised to satisfy an important requirement of sports fishing, for which the current state of the art offers no specific solutions.

The aforementioned requirement refers to the need to spread efficacious chum before fishing with a fishing-rod. To satisfy such a need, chum should be spread out at the same depth as the bait on the hook.

Today, this is very difficult to obtain, since chum is always spread out at surface level.

Although chum tends to go down, it is very unlikely for it to reach the same depth as the bait.

The purpose of the invention is to provide a simple, inexpensive device, capable of spreading chum at the same depth as the bait.

The device of the invention basically consists in a small box filled with chum and lowered in the water suspended to a cable held by the user.

Once the box has reached the desired depth, the user must simply pull the cable up energetically.

The movement actuates a mechanism that opens the collapsible bottom wall of the box.

The collapse of the bottom wall releases the discharge section of the box, spreading chum in the surrounding water.

Thus, fish is attracted at the same depth as the bait, increasing chum efficacy and the possibility of catching.

For major clarity the description of the invention continues with reference to the enclosed drawings, which are intended for purposes of illustration and not in a limiting sense, whereby:
- Figs. 1 and 2 are cross-sectional views of the device of the invention with a vertical plane, showing the device in closed and open position, respectively;
- Fig. 3 is the same as above, although it refers to an alternative embodiment of the chumming device of the invention.

With reference to the enclosed figures, the device of the invention consists in a parallelepiped-shaped box (1) with a bottom lid (2) capable of collapsing downwards, being hinged to the base of one of the vertical walls of the box (1) with respect to a pin with horizontal axis (3).

A cylindrical housing (4) with basically same height as the vertical walls (1) is provided in the centre of the box (1) to contain a cylindrical latch (5) inserted into a pre-compressed cylindrical spring (6).

In particular, the upper end of the spring (6) is released on the internal side of the upper wall of the box (1), while the lower end of the spring (6) is released on an annular projection (5a) located towards the lower end of the latch (5).

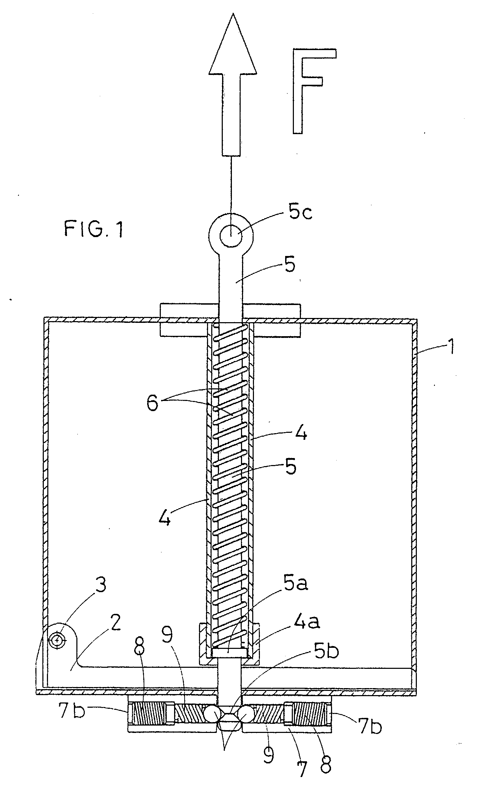

With reference to Fig. 1, the spring (6) tends to push the latch (5) downwards until the end of stroke.

The end of stroke is reached when the annular projection (5a) of the latch (5) touches the plug (4a) provided at the base of the vertical cylindrical housing (4).

The plug (4a) has a central hole through which the end of the latch (5) enters an additional hole (2a) provided in the centre of the collapsible lid (2), until it protrudes and inserts into the central through hole (7a) of an horizontal parallelepiped-shaped block (7), which acts as lock to open and close the lid (2).

Two screws with horizontal axis (8) are symmetrically fitted at the two opposite longitudinal ends of the block (7), one facing the other.

Each screw (8) is connected to a small axial helical spring (9) in internal position, exactly contained in a cylindrical housing with horizontal axis, which is released on a ball (10).

The compression of the spring (9) can be adjusted with the screw (8) through a hole (7b) located on the side of the block (7).

The thrust released by the two springs (9) on the balls (10) is such that the balls (10) tend to partially engage from opposite sides the section of the through hole (7b) that goes through the block (7) from up downwards.

With reference to the opening/closing of the collapsible lid (2), the two balls (10) co-operate with the point of the latch (5) when the latch (5) is inserted in the vertical through hole (7a) of the block (7).

In slightly internal position with respect to the point, the latch (5) is provided with a basically V-shaped perimeter groove (5b), whose walls with double inclination act as invitation for alternate strokes of the balls (10), as illustrated in the description below.

When the latch (5) penetrates the vertical through hole (7a) of the block (7), the point of the latch (5) interferes with the two balls (10), overcoming the thrust of the springs (9) provided on the back of the balls (10) and bringing the balls back to the initial section of the cylindrical housings that contain the springs (9).

The rear movement of the balls (10) frees the section of the through hole (7a) of the block (7) completely, thus allowing the point of the latch (5) to engage in it, until the latch (5) reaches the end of stroke.

The dimensions of the different components of the device of the invention are such that, when the latch (5) reaches the end of stroke, the perimeter groove (5b) of the latch (5) is perfectly aligned with the two cylindrical housings that contain the springs (9) and the balls (10) inside the block.

Under the thrust of the springs (9), the balls (10) tend to come out of their housings and penetrate into the groove (5b) of the latch (5) from opposite sides, as shown in Fig. 1.

The coupling of the balls (10) of the block (7) and the groove (5b) of the latch (5) causes the stable connection between the lid (2) joined to the block (7) and the box (1) joined to the latch (5).

To open the lid (2) and spread chum, the user must energetically pull the latch (5) up to release it from the block (7) with an elastic snap.

The energetic movement is given with a cable fitted to a suitable eyelet (5c) provided on top of the latch (5) outside the box (1).

In particular, the traction on the latch (5) must overcome the thrust released by the springs (9) on the balls (10) housed inside the groove (5b) of the latch (5).

Only in this way the balls (10) can move back into the housings of the springs (9) and free the vertical through hole (7a) of the block (7), thus allowing the complete release of the latch (5).

The possibility of adjusting the compression of the springs (9) with the screws (8) allows for adjusting the "strength" of the connection between the block (7) and the latch (5), also according to the weight of the chum loaded in the box (1), in order to prevent the lid (2) from accidentally opening accidentally.

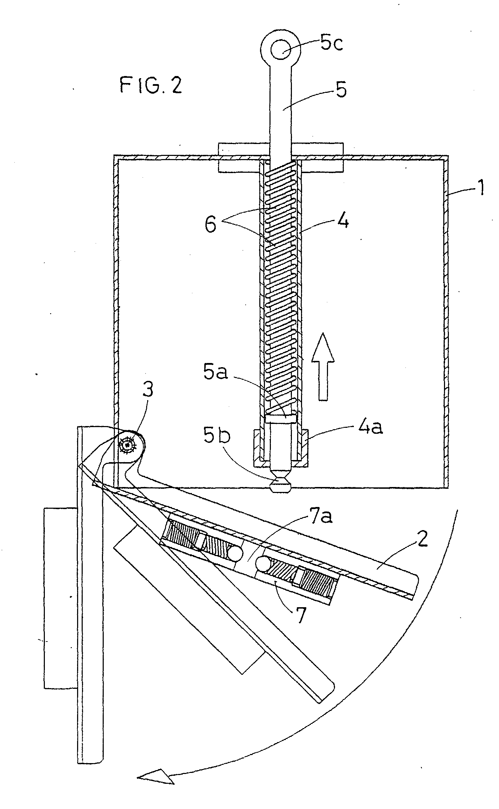

As shown in Fig. 2, the latch (5) can move back inside the box (2), thus compressing the spring (6), since the annular projection (5a) of the latch (5) tends to significantly reduce the distance from the horizontal upper wall of the box (2).

Fig. 2 also shows that, apart from uncoupling the groove (5b) and the two balls (10) of the block (7), the backward movement causes the disengagement between the latch (5) and the block (6) of the lid (2), so that the lid (2) can collapse downwards due to gravity, releasing the chum discharge section of the box (1).

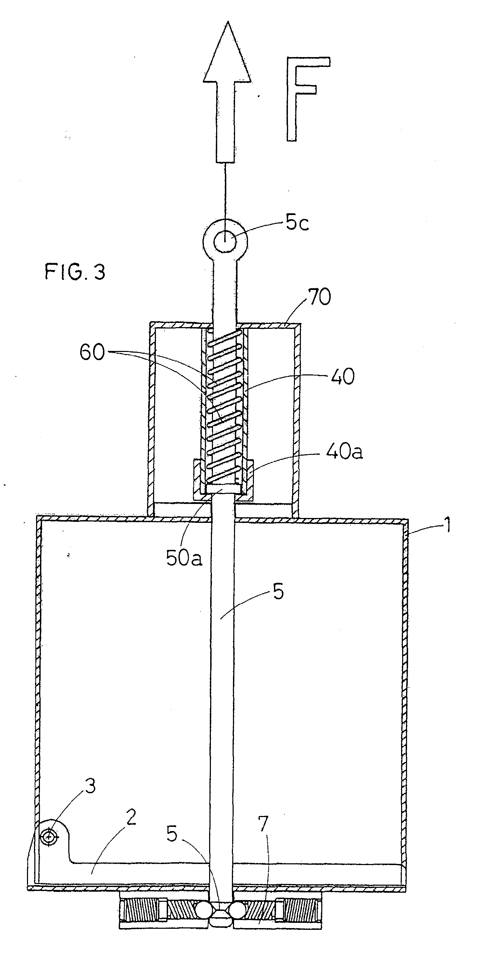

Fig. 3 shows an alternative embodiment of the chumming device of the invention, characterised by a different location of the spring that ensures the spontaneous return of the latch (5) downwards, after upward strokes caused by the user by pulling up the cable.

According to the embodiment shown in Fig. 3, the spring (60) that ensures the return of the latch (5) is inserted into the upper section of the latch(5), that is to say the section located in upper external position with respect to the box (1).

This embodiment provides for a small chamber (70) on top of the box (1), centrally provided with a cylindrical housing with vertical axis (40) closed with a plug (40a).

The housing (40) contains the upper section of the latch (5) together with the pre-compressed spring with vertical axis (60) inserted outside it.

As shown in Fig. 3, the upper end of the spring (60) engages against the upper internal wall of the chamber (70) and the lower end of the spring (60) is released against an annular projection (50a) provided at the base of the upper section of the latch (5).

Finally, it must be noted that the box (1) of the invention may have any other shape and may be provided with a restraint mechanism of the latch (5) alternatively to the block (7), without leaving the scope of the invention.

## Claims

1. Depth chumming device **characterised in that** it consists in a box (1) in which a latch (5) slides centrally and vertically inside a corresponding housing (4, 40) closed by a plug with hole (4a, 40a), with a pre-compressed helical spring (6, 60) inserted outside the latch (6, 60), whose lower end is released on a an annular projection (5a, 50a) provided on the latch (5); it being provided that the bottom of the box (1) is closed with a collapsible lid (2) with central hole in which the lower end of the latch (5) penetrates to be coupled with a restraint device (7) located under the lid (2); it being provided that the latch (5) can release from the restraint device (7) thanks to the energetic pull caused by a cable hooked to an eyelet (5c) provided outside of the box (1).

2. Depth chumming device as defined in claim 1, **characterised in that** the restraint device is composed of a basically parallelepiped-shaped block (7) incorporated into the collapsible lid (2) and provided with a central hole with vertical axis (7a) capable of receiving the lower end of the latch (5); it being provided that the lower end of the latch (5) is provided with a basically V-shaped perimeter groove (5b) that co-operates with an opposite pair of balls (10) contained in the block (7) and capable of sliding in opposite direction, selectively engaging the section of the hole (7a) of the block (7), until they engage in the perimeter groove (5b) of the latch (5) and return into rear housings, completely freeing the section of the hole (7a); it being provided that the balls (10) are subject to the thrust of rear springs with horizontal axis (9), whose external ends are connected to rear coaxial screws (8) that can be adjusted through the holes (7b) located on the sides of the block (7).

3. Depth chumming device as defined in the first or both preceding claims, **characterised in that** the cylindrical spring (6) inserted outside the latch (5) is contained in a suitable housing with vertical axis (4) in the centre of the box (1); it being provided that the upper end of the spring (6) engages against the upper wall of the box (1) and the lower end is released on the annular projection (5a) of the latch (5).

4. Depth chumming device as defined in the first or both preceding claims, **characterised in that** the cylindrical spring (60) inserted outside the latch (5) is contained in a suitable housing with vertical axis (40) in the centre of a chamber (70) on top of the box (1); it being provided that the upper end of the spring (60) engages against the upper internal wall of the chamber (70) and the lower end of the spring (60) is released against the annular projection (50a) of the latch (5).
